# EUROPÄISCHE PATENTSCHRIFT

(11) **EP 4 762 274 B1**
(45) Veröffentlichungstag und Bekanntmachung des Hinweises auf die Patenterteilung: **04.11.2026**
(21) Anmeldenummer: 24772266.3
(22) Anmeldetag: 12.09.2024
(51) Int. Cl.: F16B 37/06

(54) **EINPRESSELEMENT, VERFAHREN ZUR AUSBILDUNG EINER EINPRESSVERBINDUNG SOWIE EINPRESSVERBINDUNG**
PRESS-IN ELEMENT, METHOD FOR FORMING A PRESS-IN CONNECTION, AND PRESS-IN CONNECTION
ÉLÉMENT À INSERTION EN FORCE, PROCÉDÉ DE FORMATION D'UN RACCORDEMENT À INSERTION EN FORCE, ET RACCORDEMENT À INSERTION EN FORCE

(30) Priorität: 15.09.2023 DE 102023208982
(43) Veröffentlichungstag der Anmeldung: 24.06.2026
(73) Patentinhaber: Richard Bergner Holding GmbH & Co. KG, 91126 Schwabach (DE)
(72) Erfinder: GERSLER, Juliane, 91154 Roth-Eckersmühlen (DE); HIRSCHMANN, Markus, 91052 Erlangen (DE)
(74) Vertreter: FDST Patentanwälte
(86) Internationale Anmeldenummer: PCT/EP2024/075539
(87) Internationale Veröffentlichungsnummer: WO 2025/056703

(56) Entgegenhaltungen:
- DE-A1- 102012 220 033
- DE-A1- 2 441 977
- DE-B4- 102016 204 619
- DE-T2- 60 207 114
- US-A1- 2007 166 128

## Beschreibung

Die Erfindung betrifft ein Einpresselement mit den Merkmalen des Anspruchs 1, ein Verfahren zur Ausbildung einer Einpressverbindung nach dem Anspruch 11 sowie eine Einpressverbindung nach dem Anspruch 15.

Ein derartiges Einpresselement und eine derartige Einpressverbindung sind beispielsweise zu entnehmen aus DE 10 2016 204 619 B4. Die darin beschriebene Einpressverbindung weist ein hochfestes Bauteil, insbesondere ein hochfestes Blech auf, in welches das Einpresselement eingepresst ist. Bei derartigen Einpressverbindungen besteht das Problem, dass sich aufgrund der hohen Festigkeit das Bauteil selbst nicht oder nur sehr schlecht umformen lässt.

Im Sinne der vorliegenden Anmeldung wird unter hochfestem Bauteil ein Bauteil verstanden mit einer Festigkeit von größer 600 MPa, insbesondere von größer 800 MPa und vorzugsweise bis hin zu 2200 MPa. Neben kaltumgeformten Stahl kann das Bauteil auch aus warmumgeformten, pressgehärteten Stahl sein. Das hierfür eingesetzte Einpresselement, insbesondere eine Einpressmutter weist typischerweise eine Festigkeit von etwa 1000 MPa und speziell die Festigkeitsklassen FK 10 auf. Die (Blech-) Dicke und damit Wandstärke des Bauteils liegt typischerweise zwischen 1,5 mm und 4 mm.

In der DE 10 2016 204 619 B4 wird ein spezielles Verfahren beschrieben, bei dem durch eine Massivumformung ein Stauchkragen des Einpresselements lediglich gegen eine Lochwand des vorgelochten Bauteils gepresst wird. Ein Umformen im Sinne eines Umbördelns eines Stauchkragens oder im Sinne eines radialen Aufweitens, bei dem tangentiale Zugspannungen eingebracht werden, erfolgt hierbei nicht. Auch wird das Bauteil selbst aufgrund seiner hohen Festigkeit nicht umgeformt.

Einpressverbindungen sind beispielsweise weiterhin zu entnehmen aus der DE 24 41 977 C2 oder aus der DE 10 2012 220 033 A1. Darin sind jeweils Einpressmuttern mit einem polygonalen Stauchkragen für eine Verdrehsicherung beschrieben. Gemäß der US 2007/0166128 A1 ist für die Verdrehsicherung ergänzend auch noch das Loch im Bauteil mit einem polygonalen Umfang ausgebildet. Eine weitere Einpressverbindung ist aus DE 602 07 114 T2 zu entnehmen. Ausgehend hiervon liegt der Erfindung die Aufgabe zugrunde, eine zuverlässige Einpressverbindung zwischen einem Einpresselement und einem insbesondere hochfesten Bauteil prozesssicher zu ermöglichen.

Die Aufgabe wird gemäß der Erfindung gelöst durch ein Einpresselement mit den Merkmalen des Anspruchs 1, durch ein Verfahren zur Herstellung einer Einpressverbindung gemäß Anspruch 11 sowie durch eine Einpressverbindung mit einem solchen Einpresselement mit den Merkmalen des Anspruchs 15.

Die im Zusammenhang mit dem Einpresselement, dem Verfahren oder der Einpressverbindung angeführten Vorteile und bevorzugten Ausführungsformen sind wechselseitig sinngemäß aufeinander zu übertragen.

Bei dem Einpresselement handelt es sich insbesondere um eine Einpressmutter. Neben einer Mutter kann es sich auch um ein Einpresselement mit Durchgangsloch, insbesondere ohne Innengewinde handeln. In das Durchgangsloch wird später beispielsweise eine gewindefurchende Schraube oder ein Drahtgewindeeinsatz eingebracht.

Das Einpresselement dient zur Ausbildung einer Einpressverbindung mit einem vorgelochten und insbesondere hochfesten Bauteil. Das Einpresselement erstreckt sich in einer Einpressrichtung entlang einer Mittelachse. Die Einpressrichtung definiert zugleich eine Längsrichtung. Das Einpresselement weist ein Kopfteil mit einer typischerweise ringförmigen Kopfauflage auf, mit der das Einpresselement beim Ausbilden der Einpressverbindung zum Aufliegen auf einer Oberseite des Bauteils kommt. An das Kopfteil schließt sich in Einpressrichtung ein Stauchkragen an, welcher auch als Umformkragen bezeichnet wird. Beim Ausbilden der Einpressverbindung wird insbesondere durch ein Massivumformen ein Formschluss und/oder Reibschluß mit einem Loch, speziell mit einer Lochwand des vorgelochten Bauteils ausgebildet.

Im Hinblick auf einen prozesssicheren Fügeprozess weist der Stauchkragen ein sich an das Kopfteil anschließenden Basisabschnitt und einen sich weiter daran in Längsrichtung anschließenden Stauchkragenabschnitt auf, welcher als Füllabschnitt bezeichnet wird. Der Stauchkragen erstreckt sich allgemein ausgehend von einer Unterseite des Kopfteils in Einpressrichtung und ist in etwa als ein Ring ausgebildet. Die beiden Abschnitte sind daher ebenfalls jeweils nach Art eines Rings ausgebildet. Der Ring kann eine kreisförmige oder auch eine polygonale Kontur, beispielsweise eine hexagonale Kontur aufweisen. Die jeweiligen inneren oder äußern Flächen des Stauchkragens und damit auch die entsprechenden inneren oder äußeren Flächen der beiden Abschnitte bilden daher umlaufend geschlossene Ringflächen aus.

Der Füllabschnitt schließt sich unter Ausbildung einer innenliegenden und damit zur Mittelachse orientierten Stufe an den Basisabschnitt an. Der Basisabschnitt weist allgemein eine sich in Einpressrichtung erstreckende axiale Basishöhe auf, die sich von der Kopfauflage bis zu der Stufe erstreckt. Weiterhin weist der Füllabschnitt allgemein eine axiale Füllhöhe auf, die sich von der Stufe bis zu einem in Einpressrichtung vorderen Ende des Stauchkragens erstreckt.

Unter Stufe wird allgemein eine sich in radialer Richtung erstreckende (Ring-) Fläche zwischen dem Basisabschnitt und dem Füllabschnitt verstanden. Eine solche Ringfläche ist daher - im Vergleich zu dem Basisabschnitt und zu dem Füllabschnitt - unter einem insbesondere deutlich geringeren Neigungswinkel bezüglich einer horizontalen Ebene orientiert und verläuft insbesondere parallel oder zumindest im Wesentlichen parallel zur horizontalen Ebene. Unter zumindest im Wesentlichen senkrecht wird ein Neigungswinkel (bezüglich der horizontalen Ebene) von maximal +/- 20° und vorzugsweise von maximal +/- 10° verstanden. Die Längsrichtung bildet eine Normale zu der horizontalen Ebene.

Das obere Ende des Basisabschnitts und damit das Ende des Stauchkragens liegt auf der axialen Höhe der Kopfauflage und wird daher durch die Kopfauflage definiert. Das untere Ende des Stauchkragens wird durch das vordere, stirnseitige Freiende des Füllabschnitts definiert.

Der Stauchkragen ist weiterhin gewindefrei ausgebildet, d.h. er weist - selbst bei einer Ausgestaltung des Einpresselements als Einpressmutter - über seine gesamte axiale Länge kein (Innen- ) Gewinde auf.

Bei der Herstellung der Einpressverbindung wird allgemein das Einpresselement mit seinem Stauchkragen voraus in das Loch des Bauteils eingesetzt, welches eine umlaufende Lochwand aufweist. Mithilfe einer Matrize, welche einen vorderen Stempelbereich aufweist, wird der Stauchkragen umgeformt, und zwar derart, dass Kragenmaterial gegen die Lochwand gepresst wird und zwar insbesondere ohne, dass eine Bauteilunterseite des Bauteils vom Stauchkragen hintergriffen wird. Der vordere Stempelbereich ist nach Art eines vorderen Prägebunds ausgebildet und wird nachfolgend so bezeichnet. Bei dem Bauteil handelt es sich dabei insbesondere um ein hochfestes Bauteil, speziell Blech mit einer Festigkeit, wie sie eingangs für das hochfeste Bauteil definiert wurde.

Bei der Ausbildung der Einpressverbindung erfolgt dabei analog dem in der DE 10 2016 204 619 B4 beschriebenen Verfahren maßgeblich eine Massivumformung in drei Raumrichtungen, sodass der Stauchkragen und zwar insbesondere der Basisabschnitt mithilfe der Matrize gestaucht wird. Dabei wird Kragenmaterial zur Ausbildung einer Presspassung mit der Lochwand durch ein Massivumformen gegen diese Lochwand gepresst.

Es erfolgt daher insbesondere kein herkömmliches Umformen, bei dem der Stauchkragen radial nach außen aufgeweitet wird und eine Bauteilunterseite von unten hintergreift. Bei diesem Massivumformen erfolgt im Wesentlichen eine Druckumformung des Kragenmaterials ähnlich dem Schmieden.

Entsprechend ist auch eine Gesamthöhe des Stauchkragens, welche sich zusammensetzt aus der Basishöhe und der Füllhöhe, im Ausgangszustand vor dem Einpressen und insbesondere nach dem Einpressen bevorzugt kleinergleich einer Dicke des Bauteils, in welches das Einpresselement eingesetzt werden soll. Die Gesamthöhe ist allgemein derart bemessen, dass der Stauchkragen bei der fertigen Einpressverbindung nicht über die Unterseite des Bauteils übersteht.

Da der Stauchkragen beim Stauchprozess erheblichen Kräften ausgesetzt ist, ist zumindest der Stauchkragen über seine gesamte Länge gewindefrei ausgebildet. Hierdurch wird eine Verformung eines evtl. eingebrachten Gewindes beim Stauchprozess vermieden.

Allgemein ist das Einpresselement daher zur Ausbildung einer Einpressverbindung mit dem hochfesten Bauteil ausgebildet, wie sie insbesondere nachfolgend noch im Detail beschrieben wird.

Die Ausführungen zur Ausbildung der Einpressverbindung in der DE 10 2016 204 619 B4 werden hiermit in die vorliegende Anmeldung mit einbezogen, und zwar insbesondere die Absätze 19 und 20 sowie 22 und 24.

Durch die gestufte Ausgestaltung mit dem Basisabschnitt und den Füllabschnitt weist der Stauchkragen insgesamt an seiner radial innenliegenden Innenseite einen Absatz auf, welcher eine Stufe ausbildet. Ein von dem Stauchkragen innenseitig umschlossener zentraler Innenraum erweitert sich daher beim Übergang vom Basisabschnitt zum Füllabschnitt stufenartig. Der Füllabschnitt weist dadurch im Vergleich zu dem Basisabschnitt eine deutlich geringere Wandstärke auf und ist insgesamt sehr filigran und dünn ausgebildet. Der besondere Vorteil dieses vorlaufenden Füllabschnitts mit der geringen Wandstärke ist darin zu sehen, dass Kragenmaterial (des Füllabschnitts) tiefer zwischen Matrize und der Lochwand eintauchen kann, und zwar insbesondere bei einem Einpressverfahren, bei dem der Stauchkragen zu Beginn der des Einpressvorgangs nicht oder nicht vollständig in das Loch des Bauteils eintaucht. Durch die spezielle Gestaltung des Stauchkragens ist sichergestellt, dass eine möglichst vollständige Füllung und Verpressung von Kragenmaterial gegen die Lochwand über die gesamte oder zumindest nahezu die gesamte axiale Länge (Höhe) des Loches zuverlässig erfolgt.

Beim Herstellen der Einpressverbindung dringt der vordere Füllabschnitt daher vorzugsweise in einen freien umfangsseitigen Ringraum (Spalt) zwischen dem vorderen Prägebund der Matrize und der Lochwand ein, um die gewünschte vollständige Füllung und Verpressung über die gesamte axiale Länge des Lochs zu erreichen. Dies bedeutet zugleich, dass ein Außendurchmesser des vorderen Prägebunds vorzugsweise kleiner ist als ein Innendurchmesser des Lochs, sodass der ringförmige Spalt besteht.

Zum Umformen selbst wird der vordere Prägebund entgegen der Einpressrichtung gegen den Stauchkragen und zwar insbesondere gegen die Stufe gepresst. Hierdurch wird das Massivumformen durch eine Verdrängung und durch ein dadurch bedingtes Fließen des Materials bewirkt. Das Material fließt dabei in radialer Richtung und bildet somit eine Presspassung mit der Lochwand aus. Das Material weicht dabei teilweise auch in axialer Richtung aus, so dass das Materialfließen auch eine axiale Komponente aufweist, was dazu führt, dass Material auch in Einpressrichtung axial nach unten fließt.

Die Ausgestaltung des Stauchkragens mit Basisabschnitt und Füllabschnitt beruht dabei insbesondere auf der Überlegung, dass für die Ausbildung der Einpressverbindung verfahrenstechnisch häufig die Anforderung besteht, dass zunächst die Matrize mit ihrem vorderen Prägebund voraus in das Loch des Bauteils von unten eingeführt wird, und dass erst nachfolgend das Einpresselement von oben mittels eines geeigneten Pressstempels herangeführt und gegen die Matrize verpresst wird. Dies bedeutet, dass zu Beginn des Einpressvorgangs die Mutter mit dem Stauchkragen nicht oder zumindest nicht vollständig in das Loch eingetaucht ist. Durch den radial außenliegenden, dünnen Füllabschnitt wird nunmehr der oben beschriebene besondere Vorteil erzielt, dass der Füllabschnitt in den freien Ringraum zwischen Lochwand und dem vorderen Prägebund eindringt, um damit zuverlässig über die gesamte axiale Länge des Loches die gewünschte Materialverpressung mit der Lochwand ausbilden zu können.

Bei der Herstellung der Einpressverbindung wird daher vorzugsweise auch derart vorgegangen, dass zunächst der vordere Prägebund in das Loch eintaucht, und dass anschließend das Einpresselement von oben gegen die Matrize gepresst wird. Zu Beginn des Einpressvorgangs ist das Einpresselement daher nicht oder zumindest nicht vollständig in das Loch eingefügt, d. h. zu Beginn des Einpressvorgangs liegt die Kopfauflage nicht auf der Oberseite des Bauteils auf. Gleichzeitig liegt zu Beginn des Einpressvorgangs das Bauteil mit einer Unterseite bereits auf eine als Ringschulter ausgebildete Stützfläche der Matrize auf. Die Ringschulter bildet eine Auflagefläche der Matrize aus. Das Einpresselement wird daher beim Einpressvorgang in Richtung zum Bauteil axial versetzt, während das Bauteil sich bereits auf der Matrize, speziell auf der Ringschulter abstützt. Speziell bei derartigen Einpressvorgängen ist durch den Füllabschnitt eine prozesssichere Ausbildung einer Einpressverbindung hoher Güte gewährleistet.

**In** bevorzugter Ausgestaltung liegt die Füllhöhe im Bereich zwischen 20 % und 100 % und insbesondere im Bereich zwischen 30 % und 60 % der Basishöhe. Die Füllhöhe ist vorzugsweise allgemein geringer als die Basishöhe. Die Gesamthöhe des Stauchkragens liegt vorzugsweise im Bereich von beispielsweise 1,5 mm bis 4 mm. Sie entspricht dabei vorzugsweise der Dicke des Bauteils (Blechdicke) oder ist geringer als die Dicke des Bauteils. Diese liegt allgemein vorzugsweise zwischen 1 mm und 4 mm und insbesondere im Bereich zwischen 1,5 mm und 3 mm.

Die Wandstärke (Breite) des Basisabschnitts sowie des Füllabschnitts ist jeweils durch eine Basisdicke und eine Fülldicke definiert. Die Basisdicke sowie die Fülldicke werden dabei jeweils auf halber Basishöhe bzw. halber Füllhöhe bestimmt. Die Fülldicke liegt bevorzugt im Bereich zwischen 5 % und 40 % und insbesondere im Bereich zwischen 10 % und 30 % der Basisdicke. Der Füllabschnitt ist daher deutlich dünner ausgebildet als der Basisabschnitt, sodass er in den Ringspalt (freier Ringraum) zwischen dem vorderen Prägebund der Matrize und der Lochwand eindringen kann.

In bevorzugter Weiterbildung weist die Stufe eine radiale Stufenbreite auf und der Stauchkragen weist auf der Höhe der Stufe eine radiale Kragenbreite auf, wobei die radiale Stufenbreite im Bereich zwischen 20 % und 80 % und insbesondere im Bereich zwischen 30 % und 60 % der radialen Kragenbreite liegt. Die radiale Kragenbreite auf axialer Höhe der Stufe setzt sich zusammen aus der radialen Stufenbreite und einer radialen Breite des Füllabschnitts auf dieser axialen Höhe.

Unter radialer Stufenbreite wird allgemein die Erstreckung der Stufe in radialer Richtung verstanden. Die Stufe ist allgemein durch eine sich in radialer Richtung erstreckende (Ring-) Fläche zwischen dem Basisabschnitt und dem Füllabschnitt gebildet.

Insgesamt weist hierdurch die Stufe eine sehr große radiale Stufenbreite auf, sodass insgesamt eine Innenfläche des Stauchkragens im Bereich der Stufe deutlich in radialer Richtung nach außen versetzt ist.

Diese Stufe verläuft allgemein vorzugsweise parallel oder zumindest im Wesentlichen parallel zu einer horizontalen Ebene, die senkrecht zur Längsrichtung und damit auch zur Mittelachse orientiert ist. Unter im Wesentlichen parallel wird eine Ausrichtung unter einem als Stufenwinkel bezeichneten Neigungswinkel von maximal +/- 20° und vorzugsweise von maximal +/- 10° verstanden.

**In** einer bevorzugten Ausführungsvariante ist die Stufe nach außen geneigt orientiert, sodass sie also in Längsrichtung nach außen fällt. Der Stufenwinkel liegt insbesondere im Bereich zwischen 1° und 15° und vorzugsweise zwischen 3° und 8°.

**In** zweckdienlicher Ausgestaltung gehen der Basisabschnitt und der Füllabschnitt - im unverformten Ausgangszustand - außenseitig stufenlos ineinander über. D. h. an einer äußeren Umfangsseite weist der Stauchkragen keinen Absatz oder Stufe auf. An der äußeren Umfangsseite gehen der Basisabschnitt und der Füllabschnitt daher geradlinig ineinander über. Der Basisabschnitt und der Füllabschnitt bilden gemäß einer bevorzugten Ausgestaltung eine gemeinsame äußere Umfangsseite, die parallel zu der Mittelachse verläuft. Alternativ verläuft diese gemeinsame äußere Umfangsseite unter einem Kegelwinkel geneigt, insbesondere nach außen geneigt, zur Mittelachse. Der Kegelwinkel liegt beispielsweise im Bereich von lediglich wenigen Grad (1°-10°).

Alternativ zu dieser Ausgestaltung, bei der der Basisabschnitt und der Füllabschnitt umfangsseitig geradlinig ineinander übergehen ist eine Außenseite des Füllabschnitts oder vorzugsweise insgesamt auch der Füllabschnitt insgesamt (also auch eine Innenseite) gegenüber dem Basisabschnitt winklig orientiert und/oder ist gegenüber der Einpressrichtung unter einem äußeren Neigungswinkel schräg nach innen und damit in Richtung zur Mittelachse geneigt. Hierdurch ist durch den Füllabschnitt eine Art Einführschräge ausgebildet, welche ein Einfügen des Stauchkragens in das Loch erleichtert. Die Außenseite bzw. der gesamte Füllabschnitt sind dabei beispielsweise unter einem äußeren Neigungswinkel im Bereich zwischen 5° bis 30° und vorzugsweise im Bereich zwischen 10° und 20° geneigt.

Die zur äußeren Umfangsseite gegenüberliegende Innenseite des Stauchkragens ist allgemein schräg zur Mittelachse bzw. schräger zur Mittelachse orientiert als die äußere Umfangsseite. Die Innenseite ist dabei schräg nach außen fallend orientiert. Ein vom Stauchkragen definierter Innendurchmesser erweitert sich daher in Einpressrichtung betrachtet.

Die Innenseite des Stauchkragens im Bereich des Füllabschnitts wird nachfolgend als unterer Innenabschnitt und die Innenseite im Bereich des Basisabschnitts wird nachfolgend als oberer Innenabschnitt bezeichnet. Der untere Innenabschnitt ist gegenüber der Einpressrichtung bevorzugt unter einem unteren (inneren) Neigungswinkel schräg geneigt, wobei dieser untere, innere Neigungswinkel insbesondere im Bereich zwischen 10°-40° und speziell zwischen 15° und 30° liegt. Der untere Innenabschnitt ist dabei insbesondere schräg nach außen geneigt (positiver unterer Neigungswinkel). Alternativ kann er auch schräg nach innen geneigt sein (negativer unterer Neigungswinkel).

Der obere Innenabschnitt ist bevorzugt unter einem oberen (inneren) Neigungswinkel schräg nach außen geneigt, wobei dieser bevorzugt im Bereich zwischen 10°-40° und insbesondere 15° bis 30° liegt.

Bevorzugt verlaufen der untere Innenabschnitt und der obere Innenabschnitt parallel zueinander oder zumindest weitgehend parallel zueinander und weisen beispielsweise Neigungswinkel auf, die sich maximal um +/- 20° unterscheiden.

In einer bevorzugten Weiterbildung schließt sich an die obere Innenseite entgegen der Einpressrichtung ein oberer Wandabschnitt an, welcher bezüglich der Einpressrichtung steiler als die obere Innenseite verläuft und beispielsweise bis hin zu einer zylindrischen Ausgestaltung. Der obere Wandabschnitt weist einen geringeren Neigungswinkel im Vergleich zu der oberen Innenseite auf.

Durch den steiler gestellten oberen Wandabschnitt wird der besondere Vorteil erzielt, dass eine Art Aussparung geschaffen ist, sodass im Bereich des oberen Wandabschnitts weniger Material vorhanden ist. Damit wird insbesondere verhindert, dass beim Einpressvorgang Material nach innen verdrängt wird und beispielsweise ein dort ausgebildetes Gewinde verformt.

Wie eingangs bereits erwähnt, handelt es sich bei dem Einpresselement insbesondere um eine Einpressmutter, welche also ein insbesondere durchgehendes Loch mit einem Innengewinde aufweist. Das Innengewinde endet in Einpressrichtung betrachtet insbesondere vor Beginn des Basisabschnitts. Insbesondere endet das Innengewinde vor oder am Beginn des oberen Wandabschnitts.

Allgemein liegt bei der fertig ausgebildeten Einpressverbindung das Kopfteil mit seiner Kopfauflage unmittelbar auf einer Oberseite des Bauteils und damit auf einem umlaufenden Lochrand des Lochs auf.

**In** bevorzugter Ausgestaltung weist der Stauchkragen zur Ausbildung einer Verdrehsicherung eine polygonale und insbesondere eine hexagonale Außenkontur auf. Bevorzugt weist das gesamte Kopfteil eine solche polygonale Außenkontur auf.

Das Loch des Bauteils weist vorzugsweise korrespondierend die gleiche polygonale Umfangskontur wie der Stauchkragen auf.

Zur Ausbildung der Einpressverbindung werden - insbesondere ergänzend zu den bisherigen Ausführungen - bevorzugt folgende Schritte durchgeführt:
Gemäß einer bevorzugten Variante wird das Bauteil zunächst auf die Matrize und zwar insbesondere auf eine Ringschulter der Matrize aufgelegt, sodass der vordere Prägebund in das Loch eintaucht. Anschließend wird das Einpresselement von oben gegen die Matrize gepresst. Der Prägebund bezeichnet und definiert eine vorgegebene Prägekontur.

Der vordere Prägebund weist vorzugsweise eine sich radial nach außen erstreckende Stirnfläche auf, welche beim Einpressvorgang gegen die Stufe gepresst wird und auf diese eine axiale Umformkraft ausübt, die zu der gewünschten radialen Materialverdrängung und Umformung führt. Die Stirnfläche verläuft dabei insbesondere geradlinig. Ergänzend oder alternativ verläuft sie horizontal oder fällt nach außen ab.

Die Stirnfläche geht bevorzugt über einen Übergangsbereich in eine Umfangsseite des vorderen Prägebunds über. Der Übergangsbereich ist durch eine Fase oder gerundet ausgebildet.

Beim Einpressvorgang drückt die Stirnfläche das Material des Stauchkragens nach oben, dadurch drückt sich der Stauchkragen nach außen an den Lochrand. Der Übergangsbereich der Matrize dient insbesondere zum Ausformen der Verbindung, damit die Matrize nicht an der Einpressverbindung haften bleibt und / oder dass die die Matrize nicht an einer scharfen Kante bricht. Das Kragenmaterial wird hier umgeleitet, jedoch nicht nach außen gebogen. Es handelt sich um ein Fließen des Kragenmaterials.

Die Abmessungen des vorderen Prägebunds und des Stauchkragens sind dabei beispielsweise derart aufeinander abgestimmt, dass zu Beginn des Einpressvorgangs der Füllabschnitt mit seinem unteren Innenabschnitt auf den Übergangsbereich auftrifft und durch diesen beim Einpressvorgang zuverlässig geführt wird, sodass der Füllabschnitt zuverlässig in den umlaufenden Spalt zwischen dem vorderen Prägebund und der Lochwand eindringen kann.

Die Massivumformung des Stauchkragens wird durch die Matrize mit deren (gerader) Stirnfläche eingeleitet. Wenn das Element auf die Stirnfläche trifft, wird der Stauchkragen nach oben gestaucht und fließt somit auch radial an den Lochrand. Somit verstemmt sich das Kragenmaterial zwischen Lochrand und Matrize. Das Kragenmaterial fließt dabei um den außen und durch den Übergangsbereich gebildeten Radius. Ein herkömmliches Umbiegen erfolgt nicht, d.h. die Matrize biegt das Material des Stauchkragens nicht nach außen um.

Bei der Ausbildung der Einpressverbindung wirkt daher die Stirnfläche entgegen der Einpressrichtung auf die Stufe ein. Hierdurch wird eine Massivumformung und damit ein Fließen von Kragenmaterial bewirkt, so dass dieses in den Spalt, also in den umfangsseitigen Ring- oder Freiraum eindringt und radial gegen die Lochwand gepresst wird. Bevorzugt wird auf die Stufe ausschließlich eine axiale Kraftkomponente ausgeübt. Insbesondere erfolgt hierbei kein radiales Aufweiten.

In zweckdienlicher Weiterbildung ist die Stirnfläche als eine Ringfläche ausgebildet, die nach innen zur Mittelachse hin von einem axial entgegen der Einpressrichtung hervortretenden Ringkragen begrenzt ist, welcher auch als Konturkragen bezeichnet wird. Durch diesen ist eine Verdrängung von Kragenmaterial nach innen in Richtung zur Mittelachse verhindert. Dadurch wird gewährleistet, dass das Material des Stauchkragens zuverlässig radial nach außen gegen die Lochwand gepresst wird.

Allgemein sind die Geometrien des Stauchkragens, des Prägebunds sowie des Loches in engen Toleranzen aufeinander abgestimmt, sodass bei der Einpressverbindung insbesondere zumindest eine und vorzugsweise alle der folgende Eigenschaften erzielt werden:
- Die Kopfauflage liegt unmittelbar auf einer Oberseite des Bauteils auf.
- Das Einpresselement steht nicht über eine Unterseite des Bauteils über.
- Die Unterseite wird vom Stauchkragen nicht hintergriffen.
- Der gegen die Lochwand gepresste Stauchkragen erstreckt sich maximal über die gesamte oder zumindest über nahezu die gesamte axiale Länge der Lochwand. Unter nahezu gesamte Länge wird eine Abweichung von maximal 10 % und vorzugsweise maximal von 5 % verstanden. Bevorzugt erstreckt sich der Stauchkragen jedoch über die gesamte Länge.
- Das Bauteil ist im Bereich des Loches unverformt, d.h. ein Lochrand an der Unterseite ist beispielsweise nicht umgebogen / hochgezogen, so dass ggf. ein Teilstück des Stauchkragens das umgebogene Teilstück hintergreift.
- Bei dem Bauteil handelt es sich um ein hochfestes Bauteil.
- Bei dem Bauteil handelt es sich um ein vorgelochtes Bauteil

Das Loch ist vor dem Einpressvorgang durch einen geeigneten Lochformvorgang, insbesondere durch ein Scherschneiden (Stanzen) ausgebildet. Bei Bauteilen aus warmumgeformte Stahl kann der Lochformvorgang wahlweise vor oder nach der Wärmebehandlung des Bauteils erfolgen. Alternativ kann auch ein Laserschneidvorgang vorgesehen sein. Weiterhin kann das Loch durch mechanische Bearbeitung wie Fräsen oder Bohren in das Bauteil eingebracht sein. Die Lochränder verlaufen dabei im Wesentlichen parallel zur Mittelachse. Insbesondere beim Stanzvorgang, wenn ein Stanzstempel in Einpressrichtung durch das Bauteil gestoßen wird, erfolgt prozessbedingt an der Unterseite ein geringfügiges Aufreißen oder Ausbrechen an einem Rand der Lochwand, sodass die Lochwand sich dort (also insbesondere lediglich in der unteren Hälfte oder in den unteren zwei Dritteln) unter einem geringen Neigungswinkel von wenigen Grad) radial aufweitet. Zudem ist die Oberfläche der Lochwand in diesem ausgerissenen Teilbereich, also an der Bruchfläche aufgeraut. Durch diese Aufweitung und das radiale Verpressen gegen die Lochwand wird eine ausreichende Auszugssicherung in axialer Richtung entgegen die Einpressrichtung erreicht.

Bei dem Bauteil handelt es sich insbesondere um eine Einpressmutter. Alternativ kann es sich auch um einen Einpressbolzen handeln. Bei diesem schließt sich an das Kopfteil ein Schaft, insbesondere ein Gewindeschaft an, welcher sich entlang der Mittelachse in Einpressrichtung erstreckt. Der Schaft ist von dem Stauchkragen mit der speziellen Geometrie mit Basisabschnitt und Fügeabschnitt umgeben und zwar typischerweise unter Freilassung eines Ringspaltes.

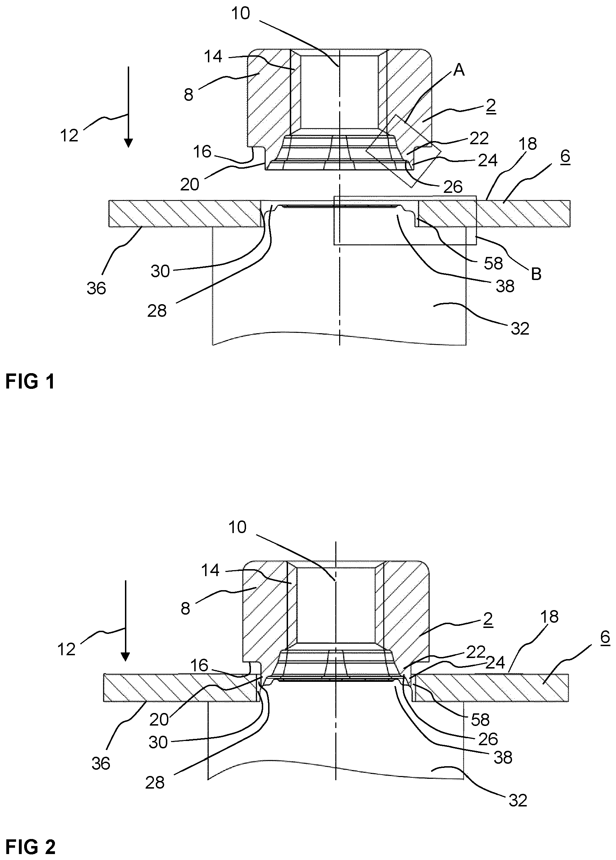

Ein Ausführungsbeispiel der Erfindung wird nachfolgend anhand der Figuren näher erläutert. Diese zeigen:
- .FIG 1: eine Querschnittsdarstellung zur Erläuterung des Verfahrens zur Ausbildung der Einpressverbindung mit einer Einpressmutter als Einpresselement, einem vorgelochten Bauteil und mit einer Matrize zu Beginn des Prozesses, bei dem das Bauteil auf der Matrize aufgelegt und die Einpressmutter nacheilend eingepresst wird,
- FIG 2: eine Querschnittsdarstellung analog FIG 1, im weiteren Verlauf des Einpressvorgangs, bei dem die Einpressmutter auf die Matrize auftrifft,
- FIG 3: eine weitere Querschnittsdarstellung im weiteren Verlauf des Einpressvorgangs, bei dem die Einpressmutter vollständig eingepresst ist,
- FIG 4: eine Draufsicht auf die Einpressmutter von oben,
- FIG 5: eine Ansicht auf die Einpressmutter von unten,
- FIG 6: eine vergrößerte Darstellung des in der FIG 1 mit A markierten Teilabschnitts
- FIG 7: eine vergrößerte Darstellung des in der FIG 1 mit B bezeichneten Teilabschnitts sowie
- FIG 8: eine Abbildung analog FIG 6 einer alternativen Variante.

In den Figuren sind gleich wirkende Teile mit den gleichen Bezugszeichen versehen.

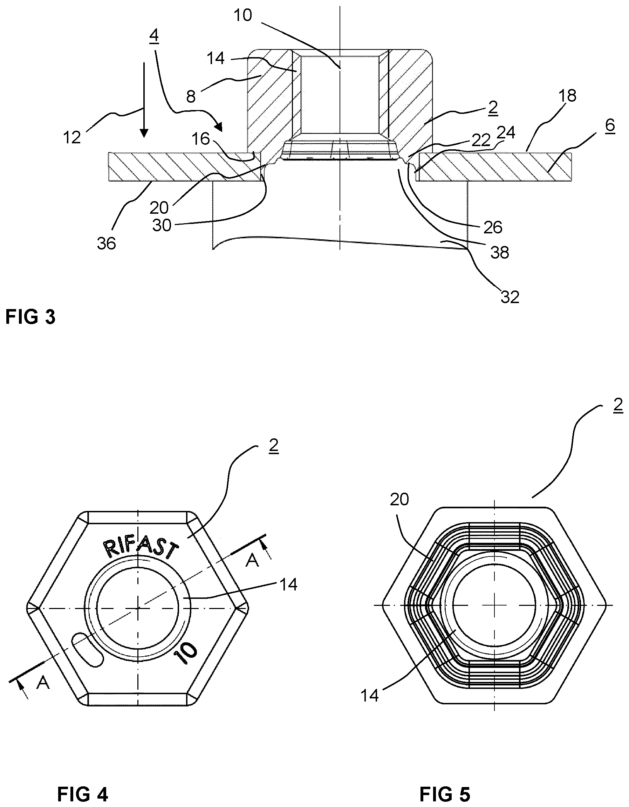

Das in den Figuren dargestellte Einpresselement ist als eine Einpressmutter 2 ausgebildet. Diese dient zum Ausbilden einer in der FIG 3 zu erkennenden Einpressverbindung 4 mit einem als Blech ausgebildeten vorgelochten Bauteil 6 mit Hilfe eines Einpressvorgangs, wie er zu den Figuren 1 bis 3 beschrieben wird.

Die Einpressmutter 2 weist allgemein ein Kopfteil 8 auf, welches sich entlang einer Mittelachse 10 in einer Einpressrichtung 12 erstreckt, die zugleich eine Längsrichtung definiert. Die Einpressmutter 2 weist ein zentrales Durchgangsloch auf, in dem ein Innengewinde 14 ausgebildet ist. In Einpressrichtung 12 ist unter Ausbildung einer Stufe am Kopfteil 8 an dessen Unterseite eine Kopfauflage 16 ausgebildet, die durch eine umlaufende, ringförmige Auflagefläche gebildet ist. Bei der Einpressverbindung 4 liegt die Kopfauflage 16 auf einer Oberseite 18 des Bauteils 6 auf.

Ausgehend von der Kopfauflage 16 erstreckt sich in Einpressrichtung 12 ein umlaufender und ringförmiger Stauchkragen 20. Dieser ist unterteilt in einen oberen Basisabschnitt 22 und einen unteren Füllabschnitt 24. Die beiden Abschnitte 22, 24 gehen unter Ausbildung einer Stufe 26 ineinander über.

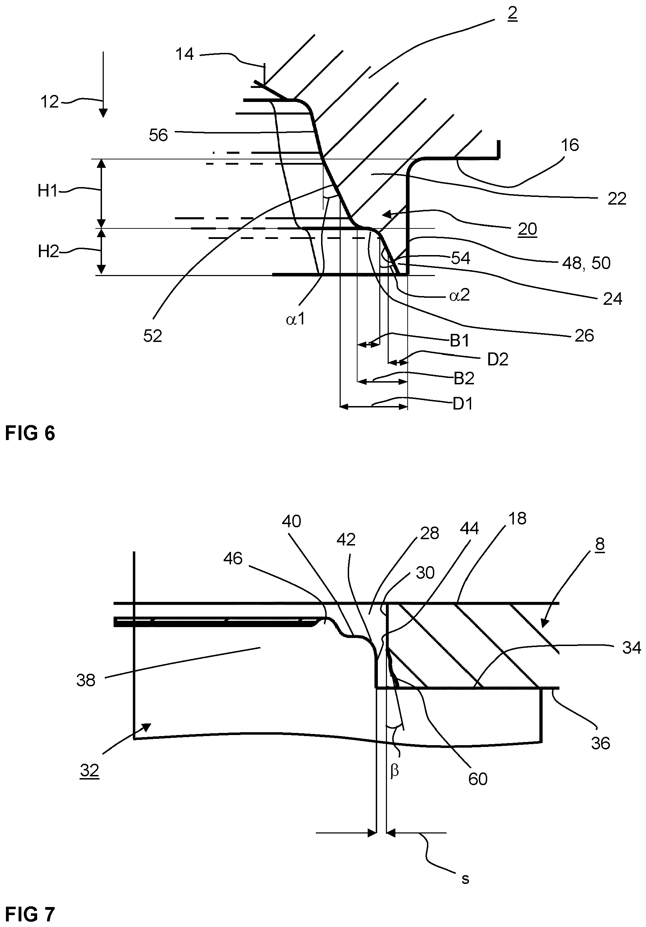

Die genaue Geometrie der Einpressmutter 2 im Bereich des Stauchkragens 20 wird nachfolgend anhand der vergrößerten Darstellung der FIG 6 näher erläutert.

Das Bauteil 6 ist als ein hochfestes, vorgelochtes Stahlblech ausgebildet, mit Festigkeiten, wie sie eingangs definiert wurden. Es weist ein Loch 28 mit einer Lochwand 30 auf, in welches die Einpressmutter 2 eingepresst wird.

Der Einpressvorgang erfolgt mithilfe einer Matrize 32. Deren Aufbau geht insbesondere auch aus der vergrößerten Darstellung gemäß FIG 7 hervor. Die Matrize 32 weist an ihrem stirnseitigen vorderen Ende eine Ringschulter 34 auf, auf der das Bauteil 6 mit einer Unterseite 36 beim Einpressvorgang aufliegt. Im zentralen Innenbereich weist die Matrize 32 einen vorderen Prägebund 38 auf, welcher entgegen der Einpressrichtung 12 hervorsteht und beim Einpressvorgang in das Loch 28 von der Unterseite 36 her eintaucht.

Der Prägebund 38 weist eine stirnseitige Ringfläche 40 (Stirnfläche) auf, die über einen insbesondere gerundeten Übergangsbereich 42 in eine äußere Umfangsseite 44 des Prägebunds 38 übergeht, an die sich dann die horizontal verlaufende Ringschulter 34 anschließt. Im Ausführungsbeispiel weist der Übergangsbereich 42 einen vergleichsweise großen Radius auf. Alternativ ist der Übergangsbereich kantiger und mit einem kleineren Radius ausgebildet.

Radial nach innen schließt sich an die stirnseitige Ringfläche 40 noch ein entgegen der Einpressrichtung 12 axial abstehender Ringkragen 46 an.

Im Ausführungsbeispiel ist die Matrize 32 massiv aus Vollmaterial ausgebildet. Alternativ kann sie innen auch hohl ausgebildet sein, insbesondere zum Fügen eines Einpressbolzens.

Wie speziell anhand der Darstellungen gemäß FIG 4 sowie FIG 5 zu erkennen ist, weist die Einpressmutter 2 im Ausführungsbeispiel eine polygonale und insbesondere hexagonale Querschnittskontur auf. Sowohl das Kopfteil 8 als auch der Stauchkragen 20 weisen diese polygonale Struktur auf. Korrespondierend hierzu weist auch das Loch 28 sowie der Prägebund 38 jeweils eine entsprechende polygonale Struktur auf.

Sofern vorliegend von ringförmigen Strukturen, wie beispielsweise Ringspalt oder ringförmiger Stauchkragen gesprochen wird, so werden hierunter entsprechende polygonale Ringstrukturen verstanden.

Alternativ zu der polygonalen Struktur kann der Stauchkragen 20 sowie das Kopfteil 8 und darüber hinaus auch das Loch 28 und der Prägebund 38 kreisförmig ausgebildet sein. Durch die polygonale Struktur wird eine besonders hohe Verdrehsicherung erreicht. In FIG 4 ist eine Schnittlinie A - A eingezeichnet. Die Schnittansichten der Figuren 1-3 sowie auch der FIG 6 zeigen jeweils zumindest ausschnittsweise Schnittflächen entlang dieses Schnittes.

Die spezielle Ausgestaltung der Einpressmutter 2 im Bereich des Stauchkragens 20 wird nunmehr anhand der FIG 6 im Detail erläutert: Der Basisabschnitt 22 erstreckt sich über eine Basishöhe H1 ausgehend von der horizontal verlaufenden Kopfauflage 16 bis zur axialen Höhe der Stufe 26.

Die Stufe 26 verläuft im Ausführungsbeispiel horizontal und damit senkrecht zur Mittelachse 10. Alternativ hierzu kann Sie auch geringfügig nach außen fallend geneigt sein, wobei sie in diesem Fall einen spitzen Stufenwinkel zur horizontalen Ebene, also zu einer Ebene senkrecht zur Einpressrichtung 12 bzw. senkrecht zur Mittelachse 10 einnimmt. Dieser spitze Stufenwinkel liegt zwischen 1° und maximal 20° und vorzugsweise zwischen 3° und 8°. Bei einer geneigten Stufe 26 wird die axiale Höhe der Stufe 26 durch eine mittlere axiale Höhe definiert. Die Stufe 26 ist allgemein durch eine ringförmige Fläche gebildet.

An diese Stufe 26 erschließt sich der Füllabschnitt 24 an, welcher sich über eine Füllhöhe H2 erstreckt. Diese ist im Ausführungsbeispiel etwas als die Basishöhe H1 und beträgt beispielsweise 70% -90% dieser Basishöhe H1. Alternativ beträgt die Füllhöhe H2 lediglich 20% bis 40% der Basishöhe H1. Die beiden Höhen H1 und H2 bilden insgesamt die Gesamthöhe des Stauchkragens 20. Diese entspricht vorzugsweise der Dicke des Bauteils 6 (Blechdicke). Alternativ ist die Gesamthöhe des Stauchkragens geringer als die Dicke des Bauteils 6.

Bei einigen Varianten, insbesondere bei dünnen Blechen, z.B. mit einer Blechdicke kleinergleich 2mm ist die Gesamthöhe des Stauchkragens 20 im Ausgangszustand beispielsweise auch größer als die Blechdicke.

Bei anderen Varianten, insbesondere bei dicken Blechen, z.B. mit einer Blechdicke größergleich 2mm, ist die Gesamthöhe des Stauchkragens 20 im Ausgangszustand sowie auch im verpressten Endzustand kleiner der Blechdicke, so dass also ein unteres Ende des Stauchkragens 20 von der Unterseite des Bleches zurückversetzt ist. Dieser Versatz beträgt beispielswiese zwischen 0,2 mm bis 0,6 mm.

Im verpressten Zustand, also bei der ausgebildeten Einpressverbindung, steht jedoch in allen Fällen der Stauchkragen 20 nicht über die Bauteilunterseite über.

Der Basisabschnitt 22 weist in der Mitte der Basishöhe H1, also auf mittlerer Basishöhe H1 eine Basisdicke D1 auf. Korrespondierend weist der Füllabschnitt 24 in der axialen Mitte der Füllhöhe H2, also auf mittlerer Füllhöhe H2 eine Fülldicke D2 auf, die deutlich geringer ist als die Basisdicke D1. Sie liegt beispielsweise lediglich im Bereich zwischen 10 % und 30 % oder alternativ lediglich im Bereich von 30% bis 50% der Basisdicke D1.

Die Stufe 26 weist insgesamt eine vergleichsweise hohe radiale Stufenbreite B1 auf. Unter radiale Stufenbreite B1 wird die Breite der Stufe 26 auf der axialen Höhe der Stufe 26 verstanden. Der Stauchkragen 20 weist auf dieser Höhe insgesamt eine radiale Kragenbreite B2 auf. Die Stufenbreite B1 liegt im Ausführungsbeispiel beispielsweise im Bereich zwischen 40% und 60 % oder alternativ im Bereich zwischen 20% und 40% der Kragenbreite B2.

Der Basisabschnitt 22 und der Füllabschnitt 24 und damit der Stauchkragen 20 insgesamt bilden gemeinsam eine im Ausführungsbeispiel der FIG 6 parallel zur Mittelachse verlaufende äußere Umfangsseite 48 aus.

Alternativ hierzu besteht auch die Möglichkeit, dass die Umfangsseite 48 insgesamt schräg nach innen geneigt verläuft.

Beispielsweise ist die gesamte Umfangsseite 48 des Stauchkragens 20 nach innen zur Mittelachse 10 geneigt oder alternativ nur eine Außenseite 50 des Füllabschnitts 24 oder der Füllabschnitt 24 insgesamt. Dies dient zur besseren Einführbarkeit in den Spalt zwischen Lochwand 30 und Prägebund 38 der Matrize bei der Verarbeitung.

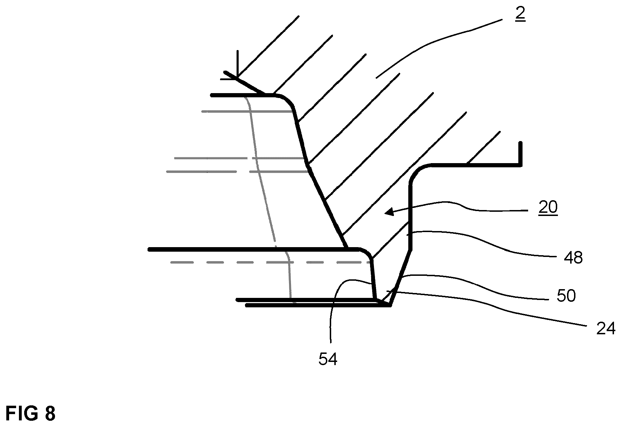

**In** der zu **FIG** 6 abgewandelten Variante gemäß **FIG** 8 ist - ausgehend von der Variante der **FIG** 6 - der gesamte Füllabschnitte 24 nach innen geneigt. Dies führt im Ausführungsbeispiel der **FIG** 8 dazu, dass die Außenseite 50 des Füllabschnitts 24 schräg nach innen und damit zur Mittelachse geneigt ist. Die Innenseite des Füllabschnitts 24 und damit der untere Innenabschnitt 54 ist im Ausführungsbeispiel der **FIG** 8 beispielhaft parallel zur Mittelachse orientiert. Dies ist jedoch nicht zwingend.

Gemäß einer Ausführungsvariante ist ein oberer Teilabschnitt der Umfangsseite 48 im Bereich des Basisabschnitt 22 parallel zur Mittelachse 10 und ein unterer Teilabschnitt der Umfangsseite 48 im Bereich des Füllabschnitts 24, welcher also eine Außenseite 50 des Füllabschnitts 24 bildet, ist schräg nach innen unter einem äußeren Neigungswinkel bezüglich einer Parallelen zur Mittelachse orientiert. Diese Außenseite 50 bildet daher eine Art Einführschräge aus. Dieser äußere Neigungswinkel liegt vorzugsweise im Bereich von 5° bis maximal 30°. Wenn die gesamte Außenseite 50 geneigt ist liegt der äußere Neigungswinkel bevorzugt im Bereich zwischen 10-20% und wenn nur der Füllabschnitt 24 geneigt ist im Bereich von 10-30%.

Eine Innenseite des Stauchkragens 20 ist im Ausführungsbeispiel schräg nach außen geneigt ausgebildet. Die Innenseite ist dabei unterteilt in eine Innenseite des Basisabschnitts 22, welche als oberer Innenabschnitt 52 bezeichnet wird, sowie in eine Innenseite des Füllabschnitts 24, welche als unterer Innenabschnitt 54 bezeichnet wird. Diese beiden Abschnitte 52, 54 sind dabei unter einem oberen Neigungswinkel α1 bzw. einen unteren Neigungswinkel α2 bezüglich der Mittelachse 10 schräg nach außen geneigt. Diese Neigungswinkel α1, α2 liegen vorzugsweise im Bereich zwischen 10° und 40°. Die beiden Neigungswinkel α1, α2 sind beispielsweise identisch oder weichen voneinander vorzugsweise lediglich um maximal +/- 20° oder maximal 5° voneinander ab.

In der alternativen Ausführungsform, bei der die Außenseite 50 nach Art einer Einführschräge schräg nach innen geneigt ist, ist der untere Neigungswinkel α2 um den äußeren Neigungswinkel geringer (vorzugsweise +/- max. 40° oder max. 5°) als der obere Neigungswinkel α1.

Die beiden Abschnitte 52, 54 gehen über die Stufe 26 ineinander über. Die Übergänge sind bevorzugt gerundet ausgebildet.

Entgegen der Einpressrichtung 12 schließt sich an den oberen Innenabschnitt 52 ein etwas steiler angestellter oberer Wandabschnitt 56 an. Dieser ist Teil eines Zwischenabschnittes zwischen dem Stauchkragen 20 und dem Beginn des Innengewindes 14.

Das Innengewinde 14 ist in Axialrichtung beabstandet vom Stauchkragen 20. Der axiale Abstand liegt dabei beispielsweise im Bereich zwischen dem 0,5 fachen und dem 1,5 fachen der Basishöhe H1. Durch diese Maßnahme wird insgesamt erreicht, dass beim Umformvorgang vermieden wird, dass das Gewinde 14 verformt wird. Damit ist insgesamt eine Maßhaltigkeit des Gewindes 14 nach dem Einpressen zuverlässig gewährleistet.

Die Einpressverbindung 4 wird vorzugsweise wie folgt ausgebildet:
In einem ersten Schritt wird die Matrize 32 von unten in das Loch 28 eingeführt, bis das Bauteil 6 mit seiner Unterseite 36 auf der Ringschulter 34 zum Aufliegen kommt. Diese Situation ist in der FIG 1 sowie insbesondere auch in der FIG 7 dargestellt. Die Einpressmutter 2 befindet sich noch außerhalb des Lochs 28.

Nachfolgend wird die Einpressmutter 2 in Einpressrichtung 12 versetzt, mit dem Stauchkragen 20 voraus in das Loch 28 eingeführt (FIG 2) und gegen die Matrize, speziell gegen den Prägebund 38 gepresst, und zwar so weit, bis die Kopfauflage 16 auf der Oberseite 18 des Bauteils 6 zum Aufliegen kommt (FIG 3).

Mit der hier beschriebenen Einpressmutter 2 besteht grundsätzlich auch die Möglichkeit, dass zunächst die Einpressmutter 2 in das Loch 28 mit dem Stauchkragen 20 eingesetzt wird, bis die Kopfauflage 16 auf der Oberseite 18 zum Aufliegen kommt und dass erst anschließend die Matrize von unten herangeführt und gegen den Stauchkragen 20 gepresst wird, um diesen umzuformen.

Der besondere Vorteil der Einpressmutter 2 ergibt sich jedoch bei dem zuvor beschriebenen Verfahren, bei dem zunächst die Matrize 32 in das Loch 28 eingeführt wird.

**In** jedem Fall sind die Dimensionen zumindest so gewählt, dass zwischen dem Prägebund 38 und insbesondere dessen Umfangsseite 44 und der Lochwand 30 ein ringförmiger Freiraum 58 (Ringspalt) gebildet ist. Die radiale Außenabmessung des Stauchkragens 20 und damit dessen Umfangsseite 48 ist ebenfalls derart bemessen, dass ein Freiraum zur Lochwand 30 hin verbleibt. Das Spaltmaß s des Freiraums 58 zwischen der Umfangsseite 44 des Prägebunds 38 und der Lochwand 30 liegt dabei vorzugsweise bei 0,1 mm bis 0,6 mm oder insbesondere bei größeren Abmessungen (z.B. größer M10) auch bis 1 mm. Bevorzugt weist der Stauchkragen 20 zur Lochwand 30 im unverformten Ausgangszustand das gleiche Spaltmaß auf oder ist alternativ sogar geringfügig, z.B. um bis zu 20% höher.

Allgemein weist der Füllabschnitt 24 an seinem vorderen Stirnende eine radiale Außenabmessung auf, die an die radiale Außenabmessung des Prägebunds 38 insoweit angepasst ist, als dass der Füllabschnitt 24 mit seinem vorderen Stirnende sich auf dem Übergangsbereich 42 der Prägebunds 38 abstützt. Anschließend erreicht die stirnseitige Ringfläche 40 des Prägebunds 38 die Stufe 26 und übt auf diese vorzugsweise ausschließlich eine axiale Kraft aus, sodass die gewünschte Massivumformung erfolgt und Material des Basisabschnitts 22 durch Fließen radial nach außen versetzt wird. Durch das Fließen wird das Material zunächst in radialer Richtung verdrängt und gegen die Lochwand 30 gepresst. Nachfolgend wirken auch axiale Kraftkomponenten, sodass auch das Material des Füllabschnitts 24, welches zwischenzeitig in dem ringförmigen Freiraum 58 eingetaucht ist, eine axiale Kraftkomponente erfährt und damit in den ringförmigen Freiraum 58 weiter eingepresst, diesen durch ein Materialfließen ausfüllt und insgesamt auch gegen die Lochwand 30 in radialer Richtung gepresst wird.

Durch die stirnseitige Anordnung des vergleichsweise dünnen Füllabschnitts 24, welcher bereits vor der eigentlichen Massivumformung in den ringförmigen Freiraum 58 eintaucht, wird daher zuverlässig gewährleistet, dass eine Materialfüllung des ringförmigen Freiraums 58 und insbesondere ein Verpressen gegen die Lochwand 30 bevorzugt über die gesamte Länge der Lochwand 30 erfolgt, selbst bei der beschriebenen Verfahrenssituation, bei der zunächst der Prägebund 38 in das Loch 28 eingefügt wird.

Insgesamt ist hierdurch prozesssicher und zuverlässig eine Einpressverbindung 4 mit hoher Auszugssicherheit und guter Verdrehsicherheit ausgebildet. Weiterhin ist die Einpressverbindung 4 in der Regel wasserdicht.

Die Lochwand 30 ist speziell durch eine Stanzoperation derart ausgeformt, dass sie zur Unterseite 36 hin sich etwas verbreitert und insbesondere ausgerissen oder ausgebrochen ist und eine Bruchfläche 60 bildet. Die Unterseite 36 ist zugleich eine Unterseite beim Stanzprozess, d. h. das Stanzwerkzeug wird in diesem Fall von oben von der Oberseite 18 in Einpressrichtung 12 in Richtung zur Unterseite 36 hin durch das Bauteil 6 hindurchgetrieben. Die Bruchfläche 60 ist in der FIG 7 zur Illustration übertrieben dargestellt. Diese Bruchfläche 60 ist üblicherweise unter einem Bruchflächenwinkel β zur Mittelachse 10 orientiert. Die axiale Höhe erstreckt sich dabei typischerweise über maximal 2/3 der Dicke des Bauteils 6.

**In** diesen durch die Bruchfläche 60 gebildete radiale Verbreiterung des Lochs 30 wird das Material des Stauchkragens 20 und insbesondere des Füllabschnitts 24 eingepresst. Die axiale Auszugssicherung wird daher entscheidend durch die spezielle Ausgestaltung des Füllabschnitts 24 beeinflusst und sichergestellt.

Durch den oben beschriebenen Stanzprozess wird häufig auch im Bereich der Oberseite 18 die Lochwand 30 verformt, sodass die Lochwand 30 auch an der Oberseite 18 einen Einzug hat.

Bei einigen Anwendungen besteht die Anforderung, dass der Loch-Stanzprozess und das Einpressen der Einpressmutter 2 von unterschiedlichen Richtungen erfolgen, d. h der Stanzprozess wird, in Richtung von der Oberseite 18 zur Unterseite 36 hindurchgeführt, wohingegen die Einpressmutter 2 von der Unterseite 36 des Bauteils 6 in Richtung zur Oberseite 18 eingesetzt wird.

Auch bei dieser Verfahrensvariante, bei der also eine Stanzoperation und die Einpressoperation von entgegengesetzten Richtungen erfolgt, ist durch den Füllabschnitt 24 eine Materialverpressung gegen die (geringfügig) aufgeweitete Lochwand 30 im Bereich der Oberseite 18 und damit auch in diesem Fall eine axiale Auszugssicherung erreicht.

### Bezugszeichenliste

- 2: Einpressmutter
- 4: Einpressverbindung
- 6: Bauteil
- 8: Kopfteil
- 10: Mittelachse
- 12: Einpressrichtung
- 14: Innengewinde
- 16: Kopfauflage
- 18: Oberseite
- 20: Stauchkragen
- 22: Basisabschnitt
- 24: Füllabschnitt
- 26: Stufe
- 28: Loch
- 30: Lochwand
- 32: Matrize
- 34: Ringschulter
- 36: Unterseite
- 38: Prägebund
- 40: Ringfläche
- 42: Übergangsbereich
- 44: Umfangsseite des Prägebunds
- 46: Ringkragen
- 48: Umfangsseite des Stauchkragens 20
- 50: Außenseite des Füllabschnitts
- 52: oberer Innenabschnitt
- 54: unterer Innenabschnitt
- 56: oberer Wandabschnitt
- 58: ringförmiger Freiraum
- 60: Bruchfläche
- H1: Basishöhe
- H2: Füllhöhe
- D1: Basisdicke
- D2: Fülldicke
- B1: radiale Stufenbreite
- B2: radiale Kragenbreite

- α1: oberer Neigungswinkel des oberen Innenabschnitts
- α2: unterer Neigungswinkel des unteren Innenabschnitts
- β: Bruchflächenwinkel
- s: Spaltmaß

## Patentansprüche

1. Einpresselement (2), insbesondere Einpressmutter (2) zur Ausbildung einer Einpressverbindung (4) mit einem vorgelochten Bauteil (6), wobei das Einpresselement (2)
- sich in einer Einpressrichtung (12) entlang einer Mittelachse (10) erstreckt
- ein Kopfteil (8) mit einer Kopfauflage (16) zum Aufliegen auf das Bauteil (6) aufweist
- ein sich in Einpressrichtung (12) an das Kopfteil (8) anschließenden Stauchkragen (20) aufweist, welcher gewindefrei ausgebildet ist, **dadurch gekennzeichnet, dass**
- der Stauchkragen (20) einen Basisabschnitt (22) und einen Füllabschnitt (24) aufweist, wobei der Füllabschnitt (24) sich unter Ausbildung einer innenliegenden, zur Mittelachse (10) orientierten Stufe (26) an den Basisabschnitt (22) anschließt, wobei der Basisabschnitt (22) eine axiale Basishöhe (H1) aufweist, die sich von der Kopfauflage (16) bis zu der Stufe (26) erstreckt und der Füllabschnitt (24) eine axiale Füllhöhe (H2) aufweist, die sich von der Stufe (26) bis zu einem in Einpressrichtung (12) vorderen Ende des Stauchkragens (20) erstreckt

2. Einpresselement (2) nach dem vorhergehenden Anspruch, **dadurch gekennzeichnet, dass** die Füllhöhe (H2) im Bereich zwischen 20% und 100% und insbesondere im Bereich zwischen 30% und 60% der Basishöhe (H1) liegt.

3. Einpresselement (2) nach einem der vorhergehenden Ansprüche, **dadurch gekennzeichnet, dass** der Basisabschnitt (22) auf halber Basishöhe (H1) eine Basisdicke (D1) und der Füllabschnitt (24) auf halber Füllhöhe (H2) eine Fülldicke (D2) aufweist und dass die Fülldicke (D2) im Bereich zwischen 5% und 40% und insbesondere im Bereich zwischen 10% und 30% der Basisdicke (D1) liegt.

4. Einpresselement (2) nach einem der vorhergehenden Ansprüche, **dadurch gekennzeichnet, dass** die Stufe (26) eine radiale Stufenbreite (B1) aufweist und der Stauchkragen (20) auf Höhe der Stufe (26) eine radiale Kragenbreite (B2) aufweist, und dass die radiale Stufenbreite (B1) im Bereich zwischen 20% und 80% der radialen Kragenbreite (B2) und insbesondere im Bereich zwischen 30% und 60% der radialen Kragenbreite (B2) liegt.

5. Einpresselement (2) nach einem der vorhergehenden Ansprüche, **dadurch gekennzeichnet, dass** der Basisabschnitt (22) und der Füllabschnitt (24) außenseitig stufenlos ineinander übergehen.

6. Einpresselement (2) nach einem der vorhergehenden Ansprüche, **dadurch gekennzeichnet, dass** der Basisabschnitt (22) und der Füllabschnitt (24) eine gemeinsame Umfangsseite (48) ausbilden, die parallel zur Mittelachse (10) verläuft.

7. Einpresselement (2) nach einem der Ansprüche 1 bis 5, **dadurch gekennzeichnet, dass** eine Außenseite (50) des Füllabschnitts (24) schräg nach innen in Richtung zur Mittelachse (10) geneigt ist, vorzugsweise unter einem äußeren Neigungswinkel im Bereich zwischen 5° bis 30°.

8. Einpresselement (2) nach einem der vorhergehenden Ansprüche, **dadurch gekennzeichnet, dass** eine als unterer Innenabschnitt (54) bezeichnete Innenseite des Füllabschnitts (24) gegenüber der Einpressrichtung (12) unter einem unteren Neigungswinkel (α2) schräg vorzugsweise nach außen geneigt ist, wobei der untere Neigungswinkel (α2) insbesondere im Bereich zwischen 10° bis 40° und speziell zwischen 15°und 30° liegt.

9. Einpresselement (2) nach einem der vorhergehenden Ansprüche, **dadurch gekennzeichnet, dass** eine als oberer Innenabschnitt (52) bezeichnete Innenseite des Basisabschnitts (22) gegenüber der Einpressrichtung (12) unter einem oberen Neigungswinkel (α1) schräg nach außen geneigt ist, wobei der obere Neigungswinkel (α1) insbesondere im Bereich zwischen 10° bis 40° uns speziell zwischen 15°und 30° liegt und wobei in bevorzugter Ausgestaltung sich an den oberen Innenabschnitt (52) entgegen der Einpressrichtung (12) ein oberer Wandabschnitt (56) anschließt, welcher steiler als der obere Innenabschnitt (52) und bevorzugt bis hin zu zylindrisch verläuft..

10. Einpresselement (2) nach einem der vorhergehenden Ansprüche, **dadurch gekennzeichnet, dass** der Stauchkragen (20) eine polygonale, insbesondere hexagonale Außenkontur (48) aufweist.

11. Verfahren zur Herstellung einer Einpressverbindung (4) zwischen einem Einpresselement (2) nach einem der vorhergehenden Ansprüche und einem vorgelochten Bauteil (6) mit einem Loch (28), welches eine umlaufende Lochwand (30) aufweist, wobei das Einpresselement (2) mit seinem Stauchkragen (20) in das Loch (28) eintaucht und wobei mit Hilfe einer Matrize (32), welche einen vorderen Prägebund (38) aufweist, der Stauchkragen (20) umgeformt wird, so dass Kragenmaterial gegen die Lochwand (30) gepresst wird, insbesondere ohne dass eine Unterseite (36) des Bauteils (6) vom Stauchkragen (20) hintergriffen wird.

12. Verfahren nach dem vorhergehenden Anspruch, wobei der Füllabschnitt (24) in einen ringförmigen Freiraum (58) zwischen einer Umfangsseite (44) des vorderen Prägebunds (38) und der Lochwand (30) eindringt.

13. Verfahren nach einem der beiden vorhergehenden Ansprüche, wobei zunächst das Bauteil (6) auf die Matrize (32) aufgelegt wird und der vordere Prägebund (38) in das Loch (28) eintaucht, und anschließend das Einpresselement (2) von oben gegen die Matrize (32) gepresst wird.

14. Verfahren nach einem der Ansprüche 11 bis 13, wobei der vordere Prägebund (38) eine sich radial erstreckende Stirnfläche (40) aufweist, welche gegen die Stufe (26) gepresst wird, wobei vorzugsweise
- die Stirnfläche (40) über einen gerundeten oder durch eine Fase gebildeten Übergangsbereich (42) in eine Umfangsseite (44) des vorderen Prägebunds (38) übergeht und bevorzugt zwischen der Umfangsseite (44) und Lochwand (30) ein ringförmiger Freiraum (58) zu Beginn der Einpressvorgangs besteht, und / oder
- die Stirnfläche (40) entgegen der Einpressrichtung (12) auf die Stufe (26) einwirkt und durch eine Massivumformung von Kragenmaterial dieses in einen umfangsseitigen ringförmigen Freiraum (58) zwischen dem vorderen Prägebund (38) und der Lochwand (30) presst und / oder.
- die Stirnfläche als eine Ringfläche (40) ausgebildet ist, die nach innen zur Mittelachse (10) hin von einem Ringkragen (46) begrenzt ist, welcher eine Verdrängung von Kragenmaterial nach Innen in Richtung zur Mittelachse (10) verhindert.

15. Einpressverbindung (4) mit einem Einpresselement (2) nach einem der Ansprüche 1 bis 10, insbesondere hergestellt mit einem Verfahren nach einem der Ansprüche 11 bis 14.

## Claims

1. Press-in element (2), in particular a press-in nut (2), for forming a press-in connection (4) to a pre-holed component (6), wherein the press-in element (2)
- extends along a central axis (10) in a pressing-in direction (12),
- has a head part (8) with a head support (16) for resting on the component (6),
- has a compression collar (20) adjoining the head part (8) in the pressing-in direction (12) and formed without a thread, **characterized in that**
- the compression collar (20) has a base portion (22) and a filling portion (24), wherein the filling portion (24) adjoins the base portion (22) so as to form an inner step (26) which is oriented towards the central axis (10), wherein the base portion (22) has an axial base height (H1) which extends from the head support (16) as far as the step (26) and the filling portion (24) has an axial filling height (H2) which extends from the step (26) as far as an end of the compression collar (20) that is a front end in the pressing-in direction (12).

2. Press-in element (2) according to the preceding claim, **characterized in that** the filling height (H2) is in the range of between 20% and 100% and, in particular, in the range of between 30% and 60% of the base height (H1).

3. Press-in element (2) according to either of the preceding claims, **characterized in that** the base portion (22) has a base thickness (D1) at half the base height (H1) and the filling portion (24) has a filling thickness (D2) at half the filling height (H2), and **in that** the filling thickness (D2) is in the range of between 5% and 40% and, in particular, in the range of between 10% and 30% of the base thickness (D1).

4. Press-in element (2) according to one of the preceding claims, **characterized in that** the step (26) has a radial step width (B1) and the compression collar (20) has a radial collar width (B2) at the height of the step (26), and **in that** the radial step width (B1) is in the range of between 20% and 80% of the radial collar width (B2) and, in particular, in the range of between 30% and 60% of the radial collar width (B2).

5. Press-in element (2) according to one of the preceding claims, **characterized in that**, at the outer side, the base portion (22) and the filling portion (24) transition steplessly into one another.

6. Press-in element (2) according to one of the preceding claims, **characterized in that** the base portion (22) and the filling portion (24) form a common circumferential side (48) which extends parallel to the central axis (10).

7. Press-in element (2) according to one of Claims 1 to 5, **characterized in that** an outer side (50) of the filling portion (24) is inclined obliquely inwards towards the central axis (10), preferably at an exterior inclination angle in the range of between 5° and 30°.

8. Press-in element (2) according to one of the preceding claims, **characterized in that** an inner side, referred to as a lower inner portion (54), of the filling portion (24) is inclined obliquely, preferably obliquely outwards, at a lower inclination angle (α2) in relation to the pressing-in direction (12), wherein the lower inclination angle (α2) is in particular in the range of between 10° and 40° and especially of between 15° and 30°.

9. Press-in element (2) according to one of the preceding claims, **characterized in that** an inner side, referred to as an upper inner portion (52), of the base portion (22) is inclined obliquely outwards at an upper inclination angle (α1) in relation to the pressing-in direction (12), wherein the upper inclination angle (α1) is in particular in the range of between 10° and 40° and especially of between 15° and 30°, and wherein, in a preferred configuration, the upper inner portion (52) is adjoined counter to the pressing-in direction (12) by an upper wall portion (56) which extends more steeply than the upper inner portion (52) and preferably up to a cylindrical form.

10. Press-in element (2) according to one of the preceding claims, **characterized in that** the compression collar (20) has a polygonal, in particular hexagonal, outer contour (48).

11. Method for producing a press-in connection (4) between a press-in element (2) according to one of the preceding claims and a pre-holed component (6) which has a hole (28) with an encircling hole wall (30), wherein the press-in element (2) enters the hole (28) at its compression collar (20), and wherein, with the aid of a die (32) having a front forming flange (38), the compression collar (20) is deformed so that the collar material is pressed against the hole wall (30), in particular without an underside (36) of the component (6) being engaged behind by the compression collar (20).

12. Method according to the preceding claim, wherein the filling portion (24) enters an annular clearance (58) between a circumferential side (44) of the front forming flange (38) and the hole wall (30).

13. Method according to either of the two preceding claims, wherein firstly the component (6) is placed onto the die (32) and the front forming flange (38) enters the hole (28), and subsequently the press-in element (2) is pressed against the die (32) from above.

14. Method according to one of Claims 11 to 13, wherein the front forming flange (38) has a radially extending end surface (40) which is pressed against the step (26), wherein preferably
- the end surface (40) transitions into a circumferential side (44) of the front forming flange (38) via a transition region (42) which is rounded or formed by a bevel, and preferably there is an annular clearance (58) between the circumferential side (44) and the hole wall (30) at the beginning of the pressing-in process, and/or
- the end surface (40) acts on the step (26) counter to the pressing-in direction (12) and, by way of bulk deformation of collar material, presses the latter into a circumferential annular clearance (58) between the front forming flange (38) and the hole wall (30), and/or
- the end surface is in the form of an annular surface (40) which is delimited inwards towards the central axis (10) by an annular collar (46), the latter preventing displacement of collar material inwards towards the central axis (10).

15. Press-in connection (4) with a press-in element (2) according to one of Claims 1 to 10, in particular produced by way of a method according to one of Claims 11 to 14.

## Revendications

1. Élément à ajustement serré (2), en particulier écrou à ajustement serré (2) pour la réalisation d'une liaison à ajustement serré (4) avec un composant (6) préperforé, l'élément à ajustement serré (2)
- s'étendant dans un sens d'ajustement serré (12) le long d'un axe central (10)
- présentant une partie tête (8) pourvue d'un appui (16) de tête destiné à être placé sur le composant (6)
- présentant un col à refouler (20), qui est réalisé sans filetage, prolongeant la partie tête (8) dans le sens d'ajustement serré (12), **caractérisé en ce que**
- le col à refouler (20) présente une section de base (22) et une section de remplissage (24), la section de remplissage (24) prolongeant la section de base (22) en réalisant un échelon (26) interne, orienté vers l'axe central (10), la section de base (22) présentant une hauteur axiale de base (H1) qui s'étend à partir de l'appui (16) de tête jusqu'à l'échelon (26) et la section de remplissage (24) présentant une hauteur axiale de remplissage (H2), qui s'étend à partir de l'échelon (26) jusqu'à une extrémité avant, dans le sens d'ajustement serré (12), du col à refouler (20).

2. Élément à ajustement serré (2) selon la revendication précédente, **caractérisé en ce que** la hauteur de remplissage (H2) se situe dans la plage entre 20% et 100% et en particulier dans la plage entre 30% et 60% de la hauteur de base (H1).

3. Élément à ajustement serré (2) selon l'une des revendications précédentes, **caractérisé en ce que** la section de base (22) présente, à la moitié de la hauteur de base (H1), une épaisseur de base (D1) et la section de remplissage (24) présente, à la moitié de la hauteur de remplissage (H2), une épaisseur de remplissage (D2) et **en ce que** l'épaisseur de remplissage (D2) se situe dans la plage entre 5% et 40% et en particulier dans la plage entre 10% et 30% de l'épaisseur de base (D1).

4. Élément à ajustement serré (2) selon l'une des revendications précédentes, **caractérisé en ce que** l'échelon (26) présente une largeur radiale d'échelon (B1) et le col à refouler (20) présente, à hauteur de l'échelon (26), une largeur radiale de col (B2) et **en ce que** la largeur radiale d'échelon (B1) se situe dans la plage entre 20% et 80% de la largeur radiale de col (B2) et en particulier dans la plage entre 30% et 60% de la largeur radiale de col (B2).

5. Élément à ajustement serré (2) selon l'une des revendications précédentes, **caractérisé en ce que** la section de base (22) et la section de remplissage (24) se transforment, du côté externe, l'une dans l'autre sans échelon.

6. Élément à ajustement serré (2) selon l'une des revendications précédentes, **caractérisé en ce que** la section de base (22) et la section de remplissage (24) forment un côté périphérique commun (48) qui s'étend parallèlement à l'axe central (10).

7. Élément à ajustement serré (2) selon l'une des revendications 1 à 5, **caractérisé en ce qu'**un côté externe (50) de la section de remplissage (24) est incliné en biais vers l'intérieur en direction de l'axe central (10), de préférence selon un angle d'inclinaison externe dans la plage entre 5° à 30°.

8. Élément à ajustement serré (2) selon l'une des revendications précédentes, **caractérisé en ce qu'**un côté interne, désigné par section interne inférieure (54), de la section de remplissage (24) est incliné en biais selon un angle d'inclinaison inférieur (α2), de préférence vers l'extérieur, par rapport au sens d'ajustement serré (12), l'angle d'inclinaison inférieur (α2) étant en particulier situé dans la plage entre 10° et 40° et tout particulièrement entre 15° et 30°.

9. Élément à ajustement serré (2) selon l'une des revendications précédentes, **caractérisé en ce qu'**un côté interne, désigné par section interne supérieure (52), de la section de base (22) est incliné en biais selon un angle d'inclinaison supérieur (α1) vers l'extérieur par rapport au sens d'ajustement serré (12), l'angle d'inclinaison supérieur (α1) étant en particulier situé dans la plage entre 10° et 40° et tout particulièrement entre 15° et 30° et, dans un mode de réalisation préféré, la section interne supérieure (52) est prolongée, en sens inverse du sens d'ajustement serré (12), par une section supérieure (56) de paroi qui est plus raide que la section interne supérieure (52) et qui s'étend de préférence jusqu'à être cylindrique.

10. Élément à ajustement serré (2) selon l'une des revendications précédentes, **caractérisé en ce que** le col à refouler (20) présente un contour externe (48) polygonal, en particulier hexagonal.

11. Procédé pour la réalisation d'une liaison à ajustement serré (4) entre un élément à ajustement serré (2) selon l'une des revendications précédentes et un composant (6) préperforé présentant un trou (28), qui présente une paroi (30) périphérique de trou, l'élément à ajustement serré (2) plongeant avec son col à refouler (20) dans le trou (28) et le col à refouler (20) étant déformé à l'aide d'une matrice (32), qui présente un épaulement de matriçage avant (38) de telle sorte que le matériau du col est pressé contre la paroi (30) du trou, en particulier sans que le col à refouler (20) ne vienne saisir un côté inférieur (36) du composant (6).

12. Procédé selon la revendication précédente, la section de remplissage (24) pénétrant dans un espace libre annulaire (58) entre un côté périphérique (44) de l'épaulement de matriçage avant (38) et la paroi (30) du trou.

13. Procédé selon l'une des deux revendications précédentes, le composant (6) étant d'abord placé sur la matrice (32) et l'épaulement de matriçage avant (38) plongeant dans le trou (28) et l'élément à ajustement serré (2) étant ensuite pressé depuis le dessus contre la matrice (32).

14. Procédé selon l'une des revendications 11 à 13, l'épaulement de matriçage avant (38) présentant une face frontale (40) s'étendant radialement qui est pressée contre l'échelon (26), de préférence
- la face frontale (40) se transformant en un côté périphérique (44) de l'épaulement de matriçage avant (38) par l'intermédiaire d'une zone de transition (42) arrondie ou formée par un chanfrein et, de préférence, un espace libre annulaire (58) entre le côté périphérique (44) et la paroi (30) du trou existant au début du processus d'ajustement serré et/ou
- la face frontale (40) agissant sur l'échelon (26) dans le sens inverse du sens d'ajustement serré (12) et pressant le matériau du col, par une déformation en masse de celui-ci, dans un espace libre annulaire (58) périphérique, entre l'épaulement de matriçage avant (38) et la paroi (30) du trou et/ou
- la face frontale étant réalisée comme une face annulaire (40) qui est délimitée vers l'intérieur vers l'axe central (10) par un col annulaire (46) qui empêche un refoulement du matériau du col vers l'intérieur en direction de l'axe central (10).

15. Liaison à ajustement serré (4) présentant un élément à ajustement serré (2) selon l'une des revendications 1 à 10, en particulier réalisée à l'aide d'un procédé selon l'une des revendications 11 à 14.
